Europäisches Patentamt

(19) European Patent Office

Office européen des brevets

(11) Numéro de publication : **0 342 580 B1**

(12) # FASCICULE DE BREVET EUROPEEN

(45) Date de publication du fascicule du brevet :
16.10.91 Bulletin 91/42

(51) Int. Cl.⁵ : **B61H 5/00**

(21) Numéro de dépôt : **89108733.0**

(22) Date de dépôt : **16.05.89**

(54) **Dispositif de freinage d'un essieu d'un véhicule ferroviaire utilisant une boîte à disques.**

(30) Priorité : **18.05.88 FR 8806645**

(43) Date de publication de la demande :
**23.11.89 Bulletin 89/47**

(45) Mention de la délivrance du brevet :
**16.10.91 Bulletin 91/42**

(84) Etats contractants désignés :
**DE ES FR GB IT SE**

(56) Documents cités :
**FR-A- 2 215 555**
**US-A- 4 393 962**

(73) Titulaire : **GEC ALSTHOM SA**
**38, avenue Kléber**
**F-75116 Paris (FR)**

(72) Inventeur : **Nast, Jean-Daniel**
**34, rue Papin**
**F - 71200 Le Creusot (FR)**

(74) Mandataire : **Weinmiller, Jürgen et al**
**Lennéstrasse 9 Postfach 24**
**W-8133 Feldafing (DE)**

## Description

La présente invention concerne un dispositif de freinage d'un véhicule ferroviaire, cet essieu étant relié élastiquement à un châssis de bogie. Bien entendu cet essieu peut être orientable.

On connaît, pour de tels véhicules, des dispositifs de freinage du type à air comprimé utilisant des freins à disque classiques, composés chacun d'un disque et de deux mâchoires.

L'accroissement des vitesses d'exploitation des trains conduit à rechercher des dispositifs de freinage dont l'efficacité est plus grande.

Il existe, dans le domaine de l'aéronautique et dans la compétition automobile, des dispositifs de freinage utilisant des boîtes à disques concentriques, par exemple des boîtes dites "carbone sur carbone", comprenant chacune un disque central lié à l'arbre à freiner et deux disques adjacents montés chacun dans une demi-coquille mobile axialement.

Un essieu d'un véhicule ferroviaire est relié élastiquement au châssis de bogie par diverses articulations assurant le guidage et l'amortissement, quel que soit l'état de la voie ferrée. Il en résulte divers mouvements relatifs de l'essieu et du châssis de bogie. Cela impose le montage de la boîte à disques sur l'essieu et il faut alors transmettre le couple de freinage au châssis de bogie.

La présente invention a pour but de transmettre ce couple de freinage tout en limitant les masses nonsuspendues, et ce but est atteint en utilisant, comme moyen de transfert de couple, les leviers de manoeuvre des deux demi-coquilles et deux bielles articulées au châssis de bogie par une de leur extrémité, les deux leviers étant chacun suspendu à l'autre extrémité d'une bielle.

La présente invention a pour objet un dispositif de freinage d'un essieu d'un véhicule ferroviaire, cet essieu étant relié élastiquement à un châssis de bogie, caractérisé en ce qu'il comprend un disque solidaire et coaxial à l'essieu, deux disques disposés de part et d'autre du premier disque, deux demi-coquilles portant chacune un disque, ces demi-coquilles étant coaxiales à l'essieu et séparées de ce dernier par des roulements, deux leviers de manoeuvre, chaque demi-coquille étant articulée à l'extrémité d'un levier de manoeuvre, un vérin relié à l'autre extrémité de chaque levier, deux barres de liaison constituant les points d'articulation des leviers, et deux bielles reliant élastiquement le châssis et les deux leviers de manoeuvre.

En position freins débloqués, deux disques peuvent rester en contact, et dans le cas de disques de carbone cela entraîne une usure prématurée.

Afin d'égaliser les deux jeux inter-disques, le dispositif de freinage comporte un dispositif de répartition des jeux constitué de deux ressorts montés sur la barre de liaison supérieure et prenant appui sur un point fixe central appartenant au châssis, et d'un balancier articulé sur un point fixe du châssis et commandant deux biellettes reliées chacune à une bielle de liaison.

Il est décrit ci-après, à titre d'exemple et en référence au dessin annexé, un dispositif de freinage équipé d'un dispositif de répartition des jeux.

La figure 1 est une vue de dessus du dispositif.

La figure 2 est une vue selon II de la figure 1.

La figure 3 est une vue partielle selon III de la figure 2.

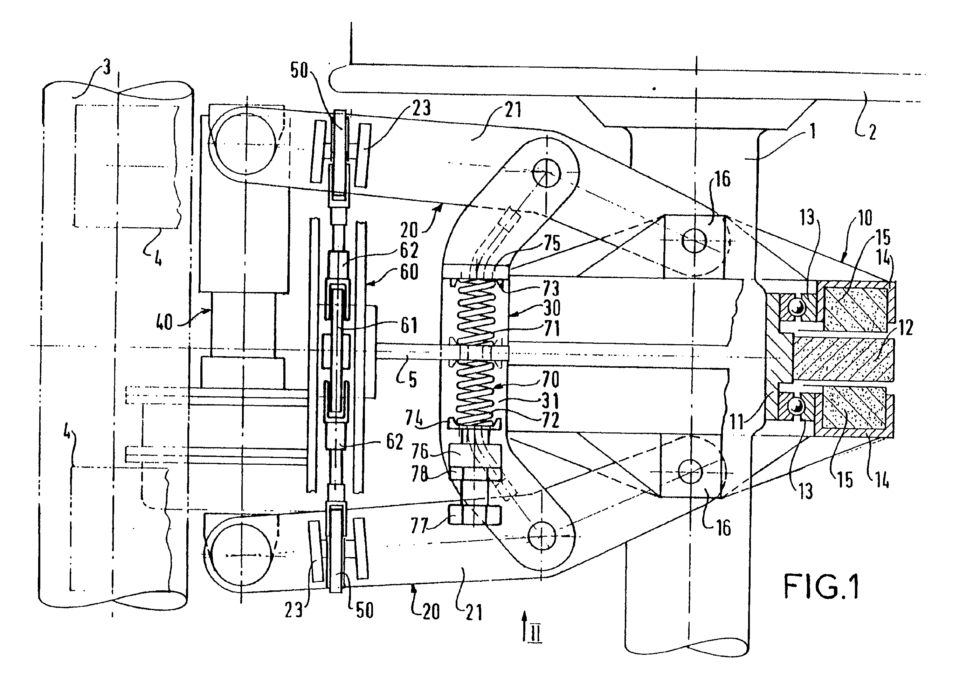

La figure 1 montre un essieu 1, une roue 2, un châssis de bogie 3 et un dispositif de freinage qui comprend une boîte à disques 10, deux leviers de manoeuvre 20, deux barres de liaison 30, un vérin 40 et deux bielles 50.

La boîte 10 comporte une bague interne 11 solidaire de l'essieu 1, un disque 12 solidaire de la bague 11, deux roulements 13 montés chacun sur la bague 11, deux demi-coquilles 14 et deux disques 15 montés chacun dans une demi-coquille.

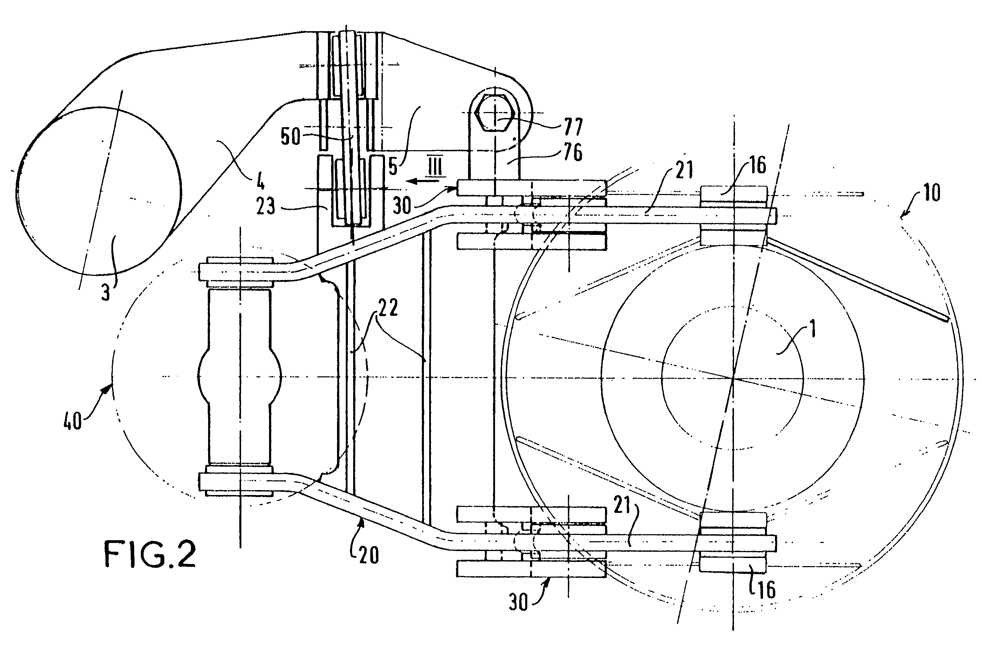

Chaque levier de manoeuvre 20 (un de ces deux leviers étant bien visible en figure 2) est constitué de deux barres 21 reliées par deux tiges verticales 22. Une extrémité des deux barres 21 est reliée à une chape 16 solidaire d'une demi-coquille 14.

L'autre extrémité des deux barres 21 est reliée à un vérin 40. Une extrémité du vérin est donc reliée à l'extrémité d'un levier de manoeuvre, l'autre extrémité du vérin étant reliée à l'extrémité de l'autre levier de manoeuvre.

Les deux barres de liaison 30, l'une supérieure, l'autre inférieure (voir figure 2) assurent le pivotement des deux leviers de manoeuvre 20.

Chaque levier de manoeuvre 20 est suspendu au châssis de bogie 3 par l'intermédiaire d'une bielle 50 comme cela est visible sur la figure 2.

Chaque bielle 50 est reliée, de manière articulée, à une chape 23 solidaire de la barre supérieure 21 d'un levier 20, et à une partie 4 solidaire du châssis 3.

Le dispositif de freinage est donc porté par l'intermédiaire des deux roulements 13 et des deux bielles 50.

Ce dispositif de freinage peut-être équipé d'un dispositif de répartition des jeux inter-disques, ce dispositif de répartition étant constitué de deux sousensembles 60, 70.

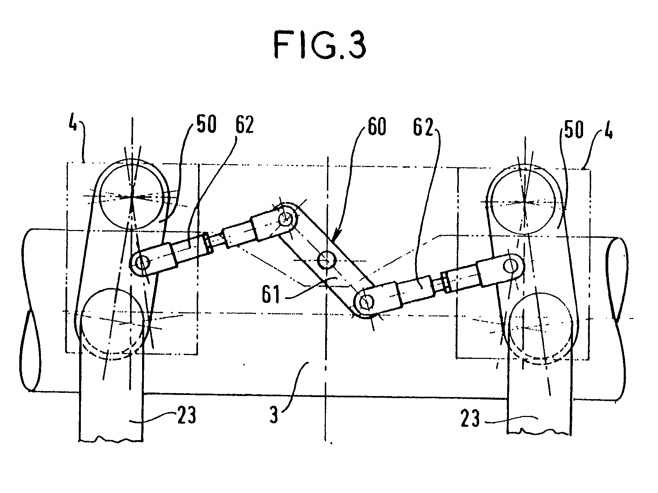

Le sous-ensemble 60 est constitué d'un balancier 61 et de deux biellettes 62, bien visibles en figure 3. Le balancier 61 est articulé en son centre sur le bâti 3. Les deux biellettes 62 sont reliées chacune à une extrémité du balancier et à une bielle de liaison 50. A chaque extension du vérin, l'extrémité d'un levier de manoeuvre 20 se déplace donc de la même valeur que la même extrémité de l'autre levier de manoeuvre.

Ce sous-ensemble doit être secondé par le sous-ensemble 70 qui assure un centrage des barres de liaison 30. Ce sous-ensemble 70 est constitué de deux ressorts 71, 72 dont une extrémité prend appui sur une pièce 5 solidaire du châssis 3, et dont l'autre extrémité prend appui sur une pièce solidaire de la barre 30 supérieure. Le ressort 71 prend appui sur une pièce de maintien 73, elle-même en appui sur une pièce 75 solidaire de la barre 30, et l'autre ressort 72 prend appui sur une pièce de maintien 74 montée mobile à l'extrémité d'une vis de réglage 77. Cette vis est vissée dans une pièce 76 solidaire de la barre 30, un contre-écrou 78 assurant le blocage de la vis. Le réglage par la vis 77 s'effectue lors du montage du dispositif de freinage.

Les deux sous-ensembles 60, 70 assurent à eux deux la répartition des jeux, en position freins débloqués.

## Revendications

1. Dispositif de freinage d'un essieu (1) d'un véhicule ferroviaire, cet essieu étant relié élastiquement à un châssis (3) de bogie, caractérisé en ce qu'il comprend un disque (12) solidaire et coaxial à l'essieu (1), deux disques (15) disposés de part et d'autre du premier disque, deux demi-coquilles (14) portant chacune un disque (15), ces demi-coquilles étant coaxiales à l'essieu et séparées de ce dernier par des roulements (13), deux leviers de manoeuvre (20), chaque demi-coquille étant articulée à l'extrémité d'un levier de manoeuvre (20), un vérin (40) relié à l'autre extrémité de chaque levier, deux barres de liaison (30) constituant les points d'articulation des leviers, et deux bielles (50) reliant élastiquement le châssis (3) et les deux leviers de manoeuvre (20).

2. Dispositif de freinage selon la revendication 1, caractérisé en ce qu'il comporte un dispositif de répartition des jeux inter-disques en situation freins débloqués, ce dispositif de répartition étant constitué de deux ressorts (71, 72) montés sur la barre de liaison supérieure (30) et prenant appui sur un point fixe central appartenant au châssis (3), et d'un balancier (61) articulé sur un point fixe du châssis et commandant deux biellettes (62) reliées chacune à une bielle de liaison (50).

## Patentansprüche

1. Bremsvorrichtung für eine Achse (1) eines Schienenfahrzeugs, wobei die Achse elastisch mit einem Chassis (3) des Fahrgestells verbunden ist, dadurch gekennzeichnet, daß die Vorrichtung eine fest mit der Achse (1) verbundene und dazu koaxiale Scheibe (12), zwei zu beiden Seiten der ersten Scheibe angeordnete Scheiben (15), zwei jeweils eine Scheibe (15) tragende Halbschalen (14), die koaxial zur Achse und von dieser durch Lager (13) getrennt angeordnet sind, zwei Betätigungshebel (20), wobei jede Halbschale mit dem Ende eines Betätigungshebels (20) gelenkig verbunden ist, je einen mit dem anderen Ende je eines der Hebel verbundenen Stellzylinder (40), zwei die Gelenkpunkte der Hebel bildende Verbindungsstangen (30), und zwei das Chassis (3) und die beiden Betätigungshebel (20) elastisch verbindende Treibstangen (50) aufweist.

2. Bremsvorrichtung nach Anspruch 1, dadurch gekennzeichnet, daß sie eine Vorrichtung zur Verteilung des Spiels zwischen den Scheiben im nichtblockierten Zustand aufweist, die aus zwei auf der oberen Verbindungsstange (30) montierte und auf einem zentralen Fixpunkt des Chassis (3) sich abstützende Federn (71, 72) und aus einem Schwinghebel (61) besteht, der um einen Fixpunkt des Chassis gelenkig gelagert ist und zwei Verbindungsstangen (62) steuert, die je mit einer Treibstange (50) verbunden sind.

## Claims

1. A braking device for braking a railway vehicle axle (1), the axle being resiliently connected to a bogey frame (3), the device being characterized in that it comprises a disk (12) fixed to and coaxial with the axle (1), two disks (15) disposed on either side of the first disk, two half-shells (14) each carrying one of the disks (15), said half-shells being coaxial with the axle and separated therefrom by ball bearings (13), two operating levers (20), each half-shell being hinged to the end of one of the operating levers (20), an actuator (40) connected to the other end of each lever, two connection bars (30) constituting hinge points for the levers, and two links (50) resiliently connecting the frame (3) to the two operating levers (20).

2. A braking device according to claim 1, characterized in that it includes a device for sharing the inter-disk gaps when the brakes are in the off position, said sharing device being constituted by two springs (71, 72) mounted on the top connection bar (30) and bearing against a central fixed point belonging to the frame (3), and a rocking arm (61) pivoted on a fixed point of the frame and controlling two small links (62) each of which is connected to one of the connection links (50).

FIG.1

FIG.2

FIG.3

6